# EUROPEAN PATENT SPECIFICATION

(11) **EP 2 228 986 B1**
(45) Date of publication and mention of the grant of the patent: **12.12.2012**
(21) Application number: 09011862.1
(22) Date of filing: 17.09.2009
(51) Int. Cl.: H04N 5/781

(54) **Broadcast recording apparatus**
Rundfunkaufzeichnungsvorrichtung
Appareil d'enregistrement de diffusion

(30) Priority: 12.03.2009 JP 2009059877
(43) Date of publication of application: 15.09.2010
(73) Proprietor: Kabushiki Kaisha Toshiba, Minato-ku Tokyo (JP)
(72) Inventor: Mori, Akihiro, Tokyo (JP)
(74) Representative: HOFFMANN EITLE

(56) References cited:
- US-A1- 2006 195 867
- US-A1- 2007 047 914
- US-A1- 2008 159 709
- US-A1- 2009 028 513

## Description

### CROSS REFERENCE TO RELATED APPLICATION(S)

The present disclosure relates to the subject matters contained in Japanese Patent Application No. 2009-059877 filed on March 12, 2009.

### FIELD

The present invention relates to a broadcast recording apparatus.

### BACKGROUND

While broadcast receivers such as hard disk recorders have been popularized recently with the wide use of digital apparatuses, it has become possible to record/reproduce lots of video information easily compared with conventional video tape recorders (VTR). In such a broadcast receiver, more pieces of audio video information can be stored in a storage area because programmed recording etc. can be performed by a simple operation. Accordingly, a method of recording images on various hard disks in accordance with how a user views programs becomes effective in addition to a method of recording broadcast content data on a single hard disk.

A publication JP-A-2002-142177 (counterpart U.S. publication is: US 2002/0106185 A1) discloses a recording/reproduction apparatus which is provided with a plurality of hard disk drives so that overwrite-recording of program content data can be made on one of the hard disk drives for repetitive recording in a predetermined time while preservative recording can be made on another of the hard disk drives for long-term storage of the overwrite-recorded program content data.

In the background art, when there is an instruction to perform a process of copying broadcast content data which has already been loop-recorded in a temporary recording area, to a preservation area, broadcast content data currently recorded on the temporary recording area is copied to the preservation area. On this occasion, loop-recording may be however further continued. Accordingly, broadcast content data which is being subjected to the copy process may be deleted in accordance with the progress of the loop-recording regardless of incompletion of the copy process. This results in poor user-friendliness.

US2008/159709 discloses a deletion and copying in providing a recording apparatus comprising: a first area, a second area in the recording medium, a second recording area being used for repeatedly overwrite-recording data, an area transfer unit transferring to the first recording area the data recorded in the second recording area. Further, it discloses determining the length of a content. The purpose is to record an entire content irrespective of its length (e.g. a football game is extended) by extending the temporal recording area.

US2009/0028513 relates to high capacity recording medium and plural low capacity recording media wherein from a first recording medium data are copied to a second medium. It compares time/space remaining in a copy destination medium with the size of the scene/content to be copied.

### SUMMARY

One of objects of the present invention is to provide a broadcast recording apparatus which can be improved in user-friendliness for a recording process as set out in claim 1.

According to an aspect of the present invention, there is provided a broadcast recording apparatus including: a first recording module configured to record content data in a first storage area having a limited capacity, the first recording module being configured to delete old content data recorded in the first storage area to create a free space in the first storage area and record new content data in the free space of the first storage area when the first storage area has no free space; a second recording module configured to copy the content data stored in the first storage area to a second storage area; a determination module configured to determine whether or not a first time period for the first recording module to start deleting the old content data is shorter than a second time period for the second recording module to complete copying the content data from the first storage area to the second storage area; and a control module configured to control the second recording module in accordance with a result of the determination of the determination module to permit copying the content data when the first time is not shorter than the second time and to prevent from copying the content data when the first time is shorter than the second time.

### BRIEF DESCRIPTION OF THE DRAWINGS

A general configuration that implements the various feature of the invention will be described with reference to the drawings. The drawings and the associated descriptions are provided to illustrate embodiments of the invention and not to limit the scope of the invention.
Fig. 1 is a block diagram showing an example of configuration of a broadcast recording apparatus according to an embodiment of the invention.
Fig. 2 is a block diagram showing another example of configuration of the broadcast recording apparatus according to an embodiment of the invention.
Fig. 3 is a block diagram showing another example of configuration of the broadcast recording apparatus according to an embodiment of the invention.
Fig. 4 is a block diagram showing another example of configuration of the broadcast recording apparatus according an embodiment of the invention.
Fig. 5 is an explanatory view showing an example of a remote controller for operating the broadcast recording apparatus according to the embodiment.
Fig. 6 is an explanatory view showing an example of a preservative recording process of the broadcast recording apparatus according to the embodiment.
Fig. 7 is a flow chart showing an example of the preservative recording process of the broadcast recording apparatus according to the embodiment.
Fig. 8 is an example in which a list of broadcast content data recorded in the past is expressed in past electronic program guide form.
Fig. 9 is an example in the case where a plurality of preservative recording targets are selected from the broadcast content data list expressed in past electronic program guide form.
Fig. 10 is a flow chart showing an example of a preservative recording process of the broadcast recording apparatus according to the embodiment.
Fig. 11 is an explanatory view showing content data to be displayed as candidates for the list in the broadcast recording apparatus according to the embodiment.
Fig. 12 is another example of display in which a list of broadcast content data recorded in the past is expressed in past electronic program guide form.

### DETAILED DESCRIPTION OF THE EMBODIMENTS

An embodiment of the invention will be described below in detail with reference to the drawings.

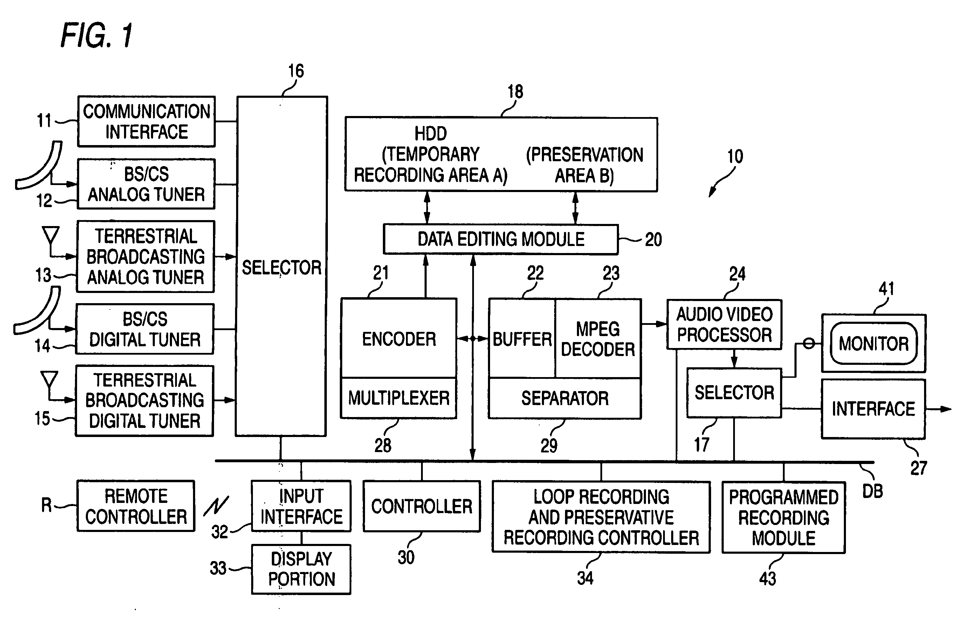

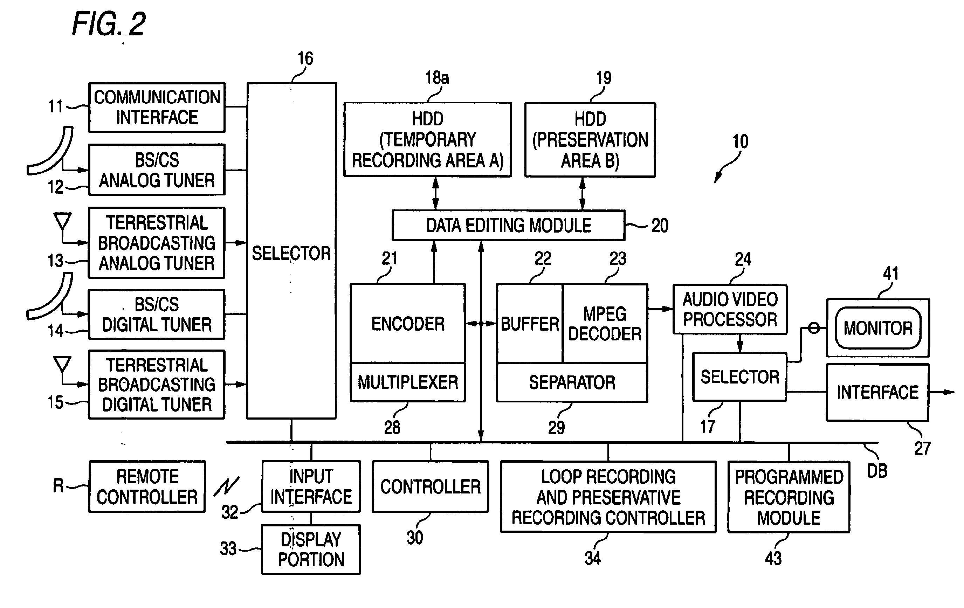

That is, Fig. 1 is a block diagram showing an example of configuration of a broadcast recording apparatus according to an embodiment of the invention. Figs. 2 to 4 are block diagrams showing other examples of configuration of the broadcast recording apparatus according to embodiments of the invention.

### <Broadcast Recording Apparatus According to an Embodiment of the Invention>

### (Configuration)

First, an example of the broadcast recording apparatus 10 shown in Fig. 1 is a digital television set having a recording function using tuners etc. as sources. However, a hard disk recorder having tuners etc. and a recording function is also preferred as an example of the broadcast recording apparatus 10.

Although a digital television set having a recording function will be accordingly described below in detail as an embodiment shown in Fig. 1, the description can be interpreted as description about a hard disk recorder having totally the same function when a monitor 41 is removed from Fig. 1.

In Fig. 1, the broadcast recording apparatus 10 which is a digital television set has a hard disk drive 18. The hard disk drive 18 has a temporary recording area A used for so-called loop recording, and a preservation area B used for preservative recording. In addition, a controller 30 is connected to respective portions through a data bus DB in order to control the overall operation of the broadcast recording apparatus 10.

The broadcast recording apparatus 10 shown in Fig. 1 further has an encoder 21, an MPEG decoder 23 and the controller 30 as main components. The encoder 21 belongs to a recording side. The MPEG decoder 23 belongs to a reproduction side. The controller 30 controls the overall operation of the apparatus. The broadcast recording apparatus 10 has an input-side selector 16 and an output-side selector 17. A communication interface 11 such as an LAN, a so-called satellite broadcasting (BS/CS) analog tuner 12, a so-called terrestrial broadcasting analog tuner 13, a satellite broadcasting (BS/CS) digital tuner 14, and a so-called terrestrial broadcasting digital tuner 15 are connected to the input-side selector 16. The input-side selector 16 outputs a signal to the encoder 21. A satellite antenna is connected to the BS/CS analog tuner 12. A terrestrial antenna is connected to the terrestrial broadcasting analog tuner 13. A satellite antenna is connected to the BS/CS digital tuner 14. A terrestrial antenna is connected to the terrestrial broadcasting digital tuner 15.

The broadcast recording apparatus 10 further has the encoder 21, a data editing module 20, and the hard disk drive 18. The data editing module 20 receives an output of the encoder 21 and performs desired data processing such as data editing. The hard disk drive 18 is connected to the data editing module 20 and has the temporary recording area A for loop recording and the preservation area B for preservative recording. The broadcast recording apparatus 10 further has the encoder 21, a buffer 22, the MPEG decoder 23, a multiplexer 28, a separator 29, the controller 30, a loop recording and preservative recording controller 34, and a programmed recording module 43. These components are connected to the controller 30 through the data bus DB. The MPEG decoder 23 receives a signal from the hard disk drive 18 and decodes the signal. An output of the selector 17 is supplied to the monitor 41 or supplied to an external apparatus through an interface 27 which performs communication with the external apparatus.

The broadcast recording apparatus 10 further has an input interface 32. The input interface 32 is connected to the controller 30 through the data bus DB and accepts a user's operation or an operation of a remote controller R. Here, the remote controller R is enabled to perform operations substantially equivalent to those of an input interface 32 provided in a body of the broadcast recording apparatus 10. The remote controller R can perform an instruction to record/reproduce data on/from the hard disk drive, an instruction to edit data, an operation on each tuner, and various settings such as setting of programmed recording, etc.

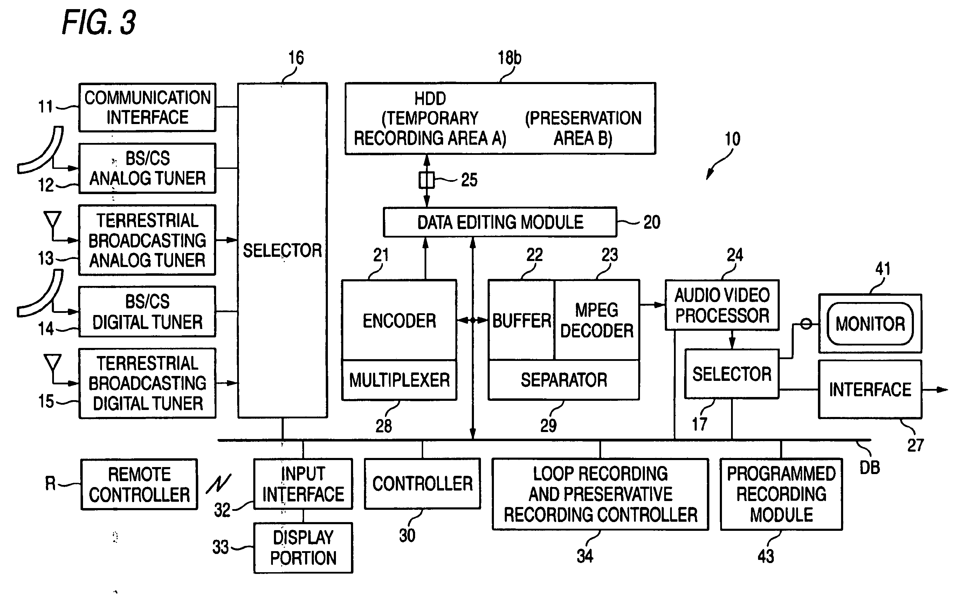

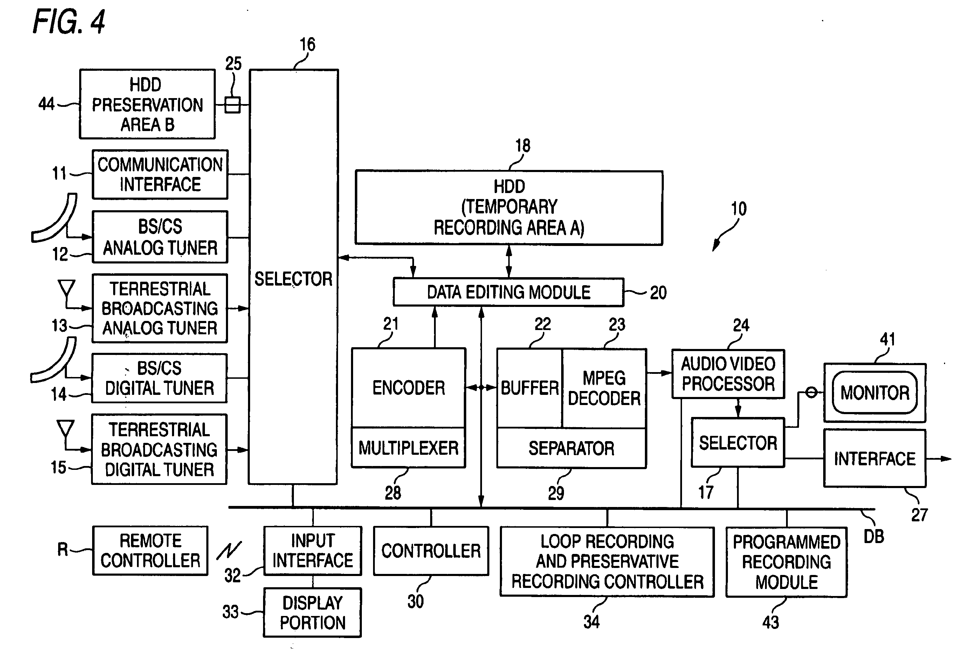

As shown in Fig. 2, the temporary recording area A and the preservation area B in the broadcast recording apparatus 10 may be provided as separate hard disk drives 18a and 19 respectively. As shown in Fig. 3, a hard disk drive 18b in the broadcast recording apparatus 10 according to an embodiment of the invention may be provided as an external hard disk drive which can be detachably attached to the broadcast recording apparatus 10 through an interface 25. As shown in Fig. 4, an external hard disk drive 44 may be provided in addition to the built-in hard disk drive 18 so that the preservation area B can be provided in the external hard disk drive 44.

### (Basic Operation)

### • Reproduction of Broadcast Content data

In the broadcast recording apparatus 10 which is a digital television set configured as described above, a broadcast signal is received and broadcast content data from the BS/CS analog tuner 12, the terrestrial broadcasting analog tuner 13, the BS/CS digital tuner 14 or the terrestrial broadcasting digital tuner 15 are displayed on the monitor 41 under control of the controller 30 etc. in accordance with an operation signal corresponding to a user's operation on the remote controller R or the input interface 32.

### • Recording Process

Next, an operation during recording, inclusive of other embodiments, will be described in detail. On the input side of the broadcast recording apparatus 10, the communication interface 11 such as an LAN is connected to an external device so that the communication interface 11 can communicate with a program information providing server S, etc. via a communication path such as the Internet, for example, through a modem M etc., or can download content data information, etc. In addition, the BS/CS analog tuner 12, the terrestrial broadcasting analog tuner 13, the BS/CS digital tuner 14 or the terrestrial broadcasting digital tuner 15 selects a channel of a broadcast signal through the antenna, demodulates the broadcast signal and supplies the demodulated broadcast signal as audio and video signals. In addition, the number of the BS/CS analog tuners, the number of the terrestrial broadcasting analog tuner, the number of the BS/CS digital tuners and the number of the terrestrial broadcasting digital tuners may not be necessarily one respectively. For example, the invention may include the case where two or three or more terrestrial broadcasting analog tuners and two or three or more BS/CS tuners are provided so as to function concurrently in accordance with programmed recording requests.

The aforementioned communication interface 11 may be an IEEE1394 interface which can receive digital content data from any external device on the network. In addition, the communication interface 11 can receive an audio signal and a video signal such as a luminance signal, a color difference signal, a composite signal, etc. from any input terminal portion not shown. These signals are controlled by the selector 16 controlled by the controller 30 etc., so that one input of these signals is selectively supplied to the encoder 21.

The encoder 21 includes an audio video analog-to-digital converter, a video encoder, and an audio encoder. The audio video analog-to-digital converter digitizes analog video and audio signals input based on the selector 16. The encoder 21 further includes a sub video encoder. An output of the encoder 21 is converted into a predetermined compression format such as MPEG and supplied to the aforementioned controller 30.

In addition, the BS/CS analog tuner 12, etc. need not be of a built-in type. For example, the BS/CS analog tuner 12, etc. may be provided externally through data input terminals so that any received analog or digital signal can be supplied to the encoder 21 and the controller 30 through the selector 16.

Here, the apparatus shown in Fig. 1 can supply information (a pack of video, audio, sub video data, etc.) encoded by the encoder 21 and created management information, or non-encoded digital information to the hard disk drive 18 or 19 through the controller 30 to thereby record the supplied information on the hard disk drive 18 or 19. Incidentally, broadcast content data output from the BS/CS analog tuner 12 or the terrestrial broadcasting analog tuner 13 are encoded by the encoder 21 and recorded on the hard disk drive 18 or the like. In the case of the BS/CS digital tuner 14 or the terrestrial broadcast digital tuner 15, output broadcast content data include broadcast content data for a plurality of channels. Broadcast content data for a desired channel is separated from the broadcast content data for the plurality of channels by the separator 29. In addition, management information is multiplexed by the multiplexer 28 so that management information for the plurality of channels can be rewritten to management information for the desired separated channel. The multiplexed broadcast content data are directly recorded on the hard disk drive 18 or the like as they are not encoded by the encoder unlike the broadcast content data given from the analog tuner.

The data editing module 20 can perform an editing process to deleting part of broadcast content data of a plurality of programs recorded on the hard disk drive 18 or the like or to attach objects of different programs to each other.

### • Reproduction Process or the Like

Next, a process for reproducing recorded information, inclusive of other embodiments, will be described chiefly in detail. The MPEG decoder 23 includes a video processor which suitably combines decoded sub video with decoded main video and outputs the sub video such as a menu, a highlight button, a subtitle, etc. overlapped on the main video.

An output audio video signal of the MPEG decoder 23 is fed to an audio video processor 24. The audio video processor 24 creates reproduced video by adding video of EPG etc. to the output audio video signal given from the MPEG decoder 23. The reproduced video is displayed on the monitor 41 through the selector 17. The selector 17 is controlled based on a select signal given from the controller 30. Accordingly, when digital signals given from the respective tuners 12, 13, 14 and 15 are directly monitored, the selector 17 can directly select one digital signal passing through the encoder 21 from digital signals.

### • Programmed Recording Process

Next, a programmed recording process will be described. In this embodiment, the programmed recording module 43 executes a scheduling process corresponding to a program specified by a user's operation on the remote controller R or the like based on electronic program information acquired from the communication interface 11 etc. In this embodiment, programmed recording information for execution of recording is recorded, for example, on the temporary recording area A etc. The programmed recording module 43 records broadcast content data received by each of the BS/CS analog tuner 12, the terrestrial broadcasting analog tuner 13, the BS/CS digital tuner 14 and the terrestrial broadcasting digital tuner 15 on the hard disk drive 19 or the like at a reserved time by referring to the stored programmed recording information.

The broadcast recording apparatus 10 according to the embodiment has such an integrated function to record/reproduce a plurality of sources on/from the hard disk drive 18 or the like. It may be also preferable that a not-shown optical disk drive as well as the hard disk drive 18 is connected to the data editing module 20 or the like to perform a recording/reproducing process in the same manner.

### <Loop Recording and Preservative Recording Process According to an Embodiment of the Invention>

Next, a loop recording and preservative recording process according to an embodiment of the invention will be described in detail below with reference to the drawings.

### (Loop Recording and Preservative Recording)

First, the outline of loop recording and preservative recording in this embodiment will be described.

Loop recording means writing and storing broadcast content data, for example, from the BS/CS analog tuner 12, for example, into the temporary recording area A of the hard disk drive 18. The loop recording is a method for continuously recording broadcast content data on the temporary recording area A, for example, within a predetermined limited capacity or within a limited time. When the capacity of written data will exceed the limited capacity or when the recording time will exceed the limited time, recording is performed in such a manner that new content data are written in a free space of the temporary recording area A while older content data written in the temporary recording area A are deleted to create the free space in the temporary recording area A. That is, loop recording is a function for recording/reproducing broadcast content data while saving the storage capacity.

The loop recording however has such a disadvantage that broadcast content data which has been already recorded but has not been reproduced yet will be deleted or overwritten because of another broadcast content data which needs to be recorded subsequently. Therefore, the preservation area B is used to avoid this disadvantage. Specifically, broadcast content data which is being loop-recorded or broadcast content data which has been already loop-recorded is copied (or moved) to the preservation area B so that the broadcast content data can be preserved for a long term.

However, there may be a case where loop recording needs to be further performed while broadcast content data which is being recorded on the temporary recording area is copied to the preservation area. In this case, there causes a disadvantage that the broadcast content data which is being copied may be deleted due to the progress of the loop recording regardless of the fact that the copy process has not been completed yet. For example, under such a situation, the user cannot grasp beforehand whether the process of copying the broadcast content data as a preservation target to the preservation area B is allowed or not. The user can see the copy process impossible only during execution of recording or after completion of recording. This is poor user-friendliness.

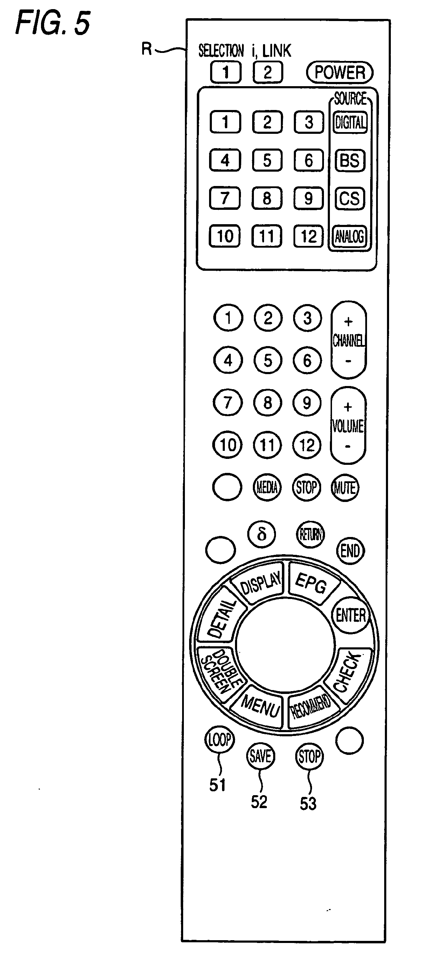

In order to avoid such a disadvantage etc. and attain improvement in user-friendliness for the recording process, it is preferable to perform an embodiment specified by the following flow chart etc. Here will be described a recording process according to the embodiment with reference to Figs. 5 to 7.

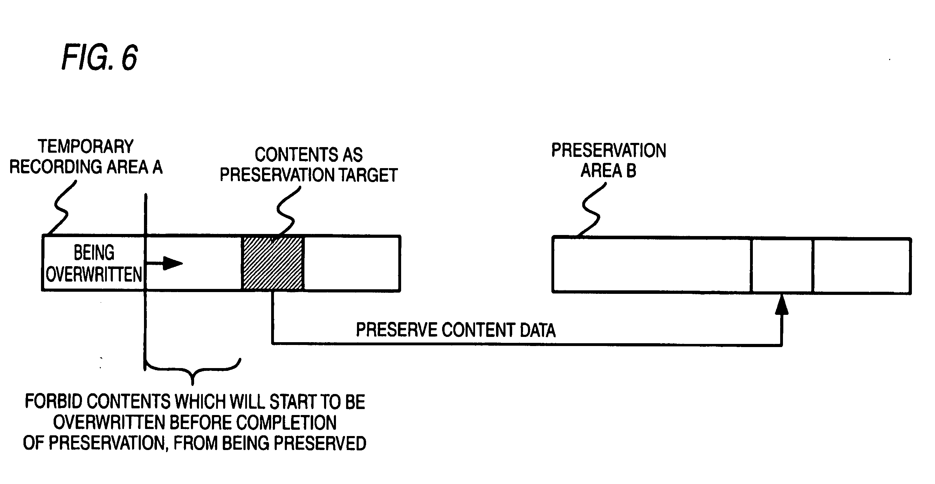

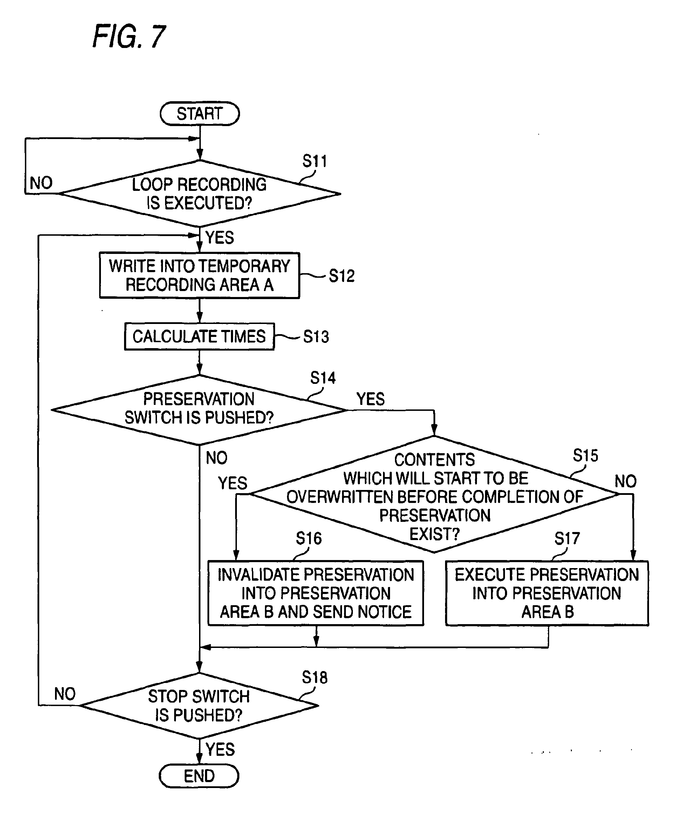

Fig. 5 is an explanatory view showing an example of a remote controller for operating the broadcast recording apparatus. Fig. 6 is an explanatory view for showing an example of a preservative recording process of the broadcast recording apparatus. Fig. 7 is a flow chart showing an example of the preservative recording process of the broadcast recording apparatus.

According to the embodiment, when a preservative recording process for copying or moving predetermined content data in the temporary recording area A to the preservation area B is performed while another broadcast content data is being recorded onto the temporary recording area A, the broadcast recording apparatus determines whether or not the preservative recording process will be completed before the predetermined contents is deleted due to loop recording. That is, the broadcast recording apparatus has a function of informing the user beforehand of whether or not the preservative recording process of the broadcast content data as a preservation target onto the preservation area B can be completed.

That is, in the broadcast recording apparatus 10 according to the embodiment of the invention, loop recording starts when the user pushes a loop recording switch 51 of the remote controller, for example, in the condition that reproduced video created from broadcast content data by the audio video processor 24 through the terrestrial broadcasting analog tuner 13 or the like is being displayed on the monitor 41 (step S11).

Upon reception of the operation signal from the loop recording switch 51, the controller 30 and the loop recording and preservative recording controller 34 feed the broadcast content data given from the terrestrial broadcasting analog tuner 13 or the like to the encoding portion 21 so that the broadcast content data encoded by the encoder 21 is recorded on the temporary recording area A of the hard disk drive 18 through the data editing module 20 (step S12).

In the broadcast recording apparatus 10 according to the embodiment, for example, the controller 30 calculates a time necessary for starting deletion of each broadcast content data already recorded on the temporary recording area A and a time required for a preservative recording process of the broadcast contents area to the preservation area B. Specifically, for example, the controller 30 calculates a time necessary for starting deletion of each broadcast content data and a time required for a preservative recording process of copying or moving the broadcast content data, by referring to information such as recording time for each broadcast content data already recorded on the temporary recording area A, bit rate, and transfer rate for copying/moving the content data (step S13).

When the user further pushes a preservative recording switch 52 of the remote controller (step S14), the controller 30 refers to the times calculated in the step S13, that is, refers to the time necessary for starting deletion of each broadcast content data already recorded on the temporary recording area A and the time required for a preservative recording process of the broadcast content data onto the preservation area B to thereby determine whether or not the broadcast content data selected as a preservative recording target in the step S 14 is broadcast content data which will be deleted before the preservative recording process of the broadcast content data is completed (step S15). Although here has been described the case where the time required for completion of the preservative recording process of the broadcast content data is calculated before the preservative recording switch 52 of the remote controller is pushed, the invention is not limited thereto. For example, the invention may be applied to the case where the required time is calculated as soon as the preservative recording switch 52 of the remote controller is pushed. In this case, the invention includes a configuration in which what time will be safe is calculated based on judgment from the present time and the user is informed of the calculated safe time. For example, the user is informed of information indicating whether preservation can be allowed if preservation will be started within ten seconds after now, so that the user can find the start time of preservation of the desired content data.

When the controller 30 determines that at least part of the broadcast content data selected as the preservative recording target is broadcast content data which will be deleted before completion of the preservative recording process (Yes in the step S15), the controller 30 informs the user of the determination result through an output unit such as a display screen, and at the same time, invalidates the preservative recording process of the content data (step S16). Invalidation of the preservative recording process means forbiddance of the preservative recording process of the broadcast content data onto the preservation area B.

When the controller 30 determines, in the step S 15, that at least part of the broadcast content data selected as the preservative recording target is not broadcast content data which will be deleted before completion of the preservative recording process (No in the step S15), the controller 30 informs the user of this determination result through the output unit such as a display screen, and at the same time, preserves the content data in the preservation area B (step S 17).

If a stop switch 53, not the preservative recording switch 52, of the remote controller is pushed now (step S 18), then loop recording is terminated immediately.

In the embodiment, determination is made beforehand in this manner as to whether or not broadcast content data as a preservative recording target is content data preservation of which can be completed before the broadcast content data will be deleted. Accordingly, the user can be informed of whether or not the broadcast content data can be stored before the broadcast content data will be deleted due to current loop recording. Thus, improvement in user-friendliness is achieved. For example, the user informed of the determination result can find out beforehand whether the preservative recording process can be performed while the loop recording is continued or whether the preservative recording process cannot be made if the loop recording is stopped, when the user wants to perform the preservation recording process.

In this embodiment, a function of suspending the loop recording process instead of forbidding the preservative recording process of broadcast content data as a preservative recording target is provided when determination is made that the broadcast content data is not content data preservation of which can be completed before the broadcast content data will be deleted. This function permits priority to be given to preservation of content data which the user regards as more important than content data being loop-recorded currently. Alternatively, a function of making the user choose either the loop recording process or the preservative recording process onto the preservation area B may be provided in this embodiment.

Although the embodiment has been described in the case where determination as to whether or not broadcast content data selected as a preservative recording target is broadcast content data which will be deleted before completion of the preservative recording process is made as soon as the preservative recording switch 52 of the remote controller is pushed, the invention is not limited thereto. For example, such determination may be made in timing before the preservative recording switch 52 of the remote controller is pushed and when display is made in electronic program guide form. According to this configuration, while loop recording is executed, the user can view a list of broadcast content data which will be deleted from the temporary recording area A before completion of the preservative recording process.

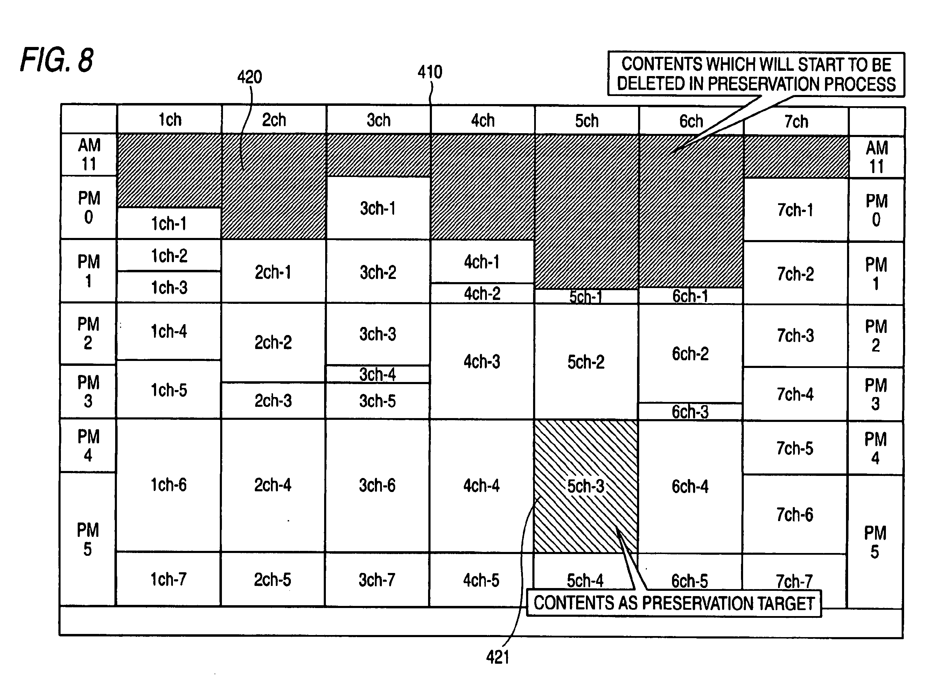

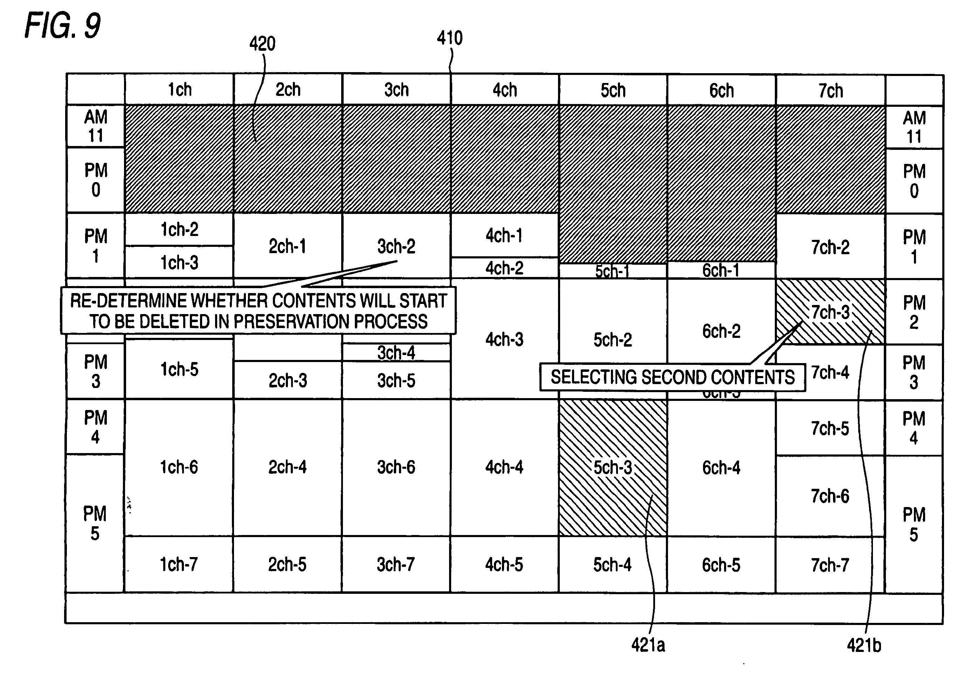

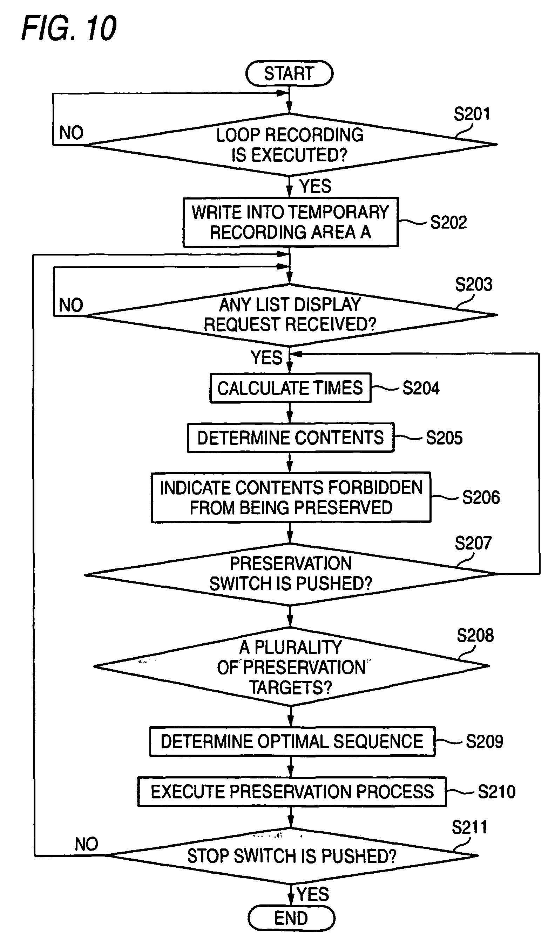

An example of configuration in the case where determination results are displayed in past electronic program guide form will be described below with reference to Figs. 8 and 9. Fig. 8 is an example in which a list 410 of broadcast content data recorded in the past is displayed in past electronic program guide form in the case where channels were loop-recorded simultaneously. Fig. 9 is an example in the case where a plurality of preservative recording targets 421 and 422 have been selected from the broadcast content data list 410 displayed in past electronic program guide form. Fig. 10 is a flow chart showing an example of the preservative recording process in the broadcast recording apparatus according to the embodiment.

As shown in Fig. 8, in the embodiment, the broadcast content data list 410 recorded in the past is displayed in past electronic program guide form to thereby indicate whether or not broadcast content data in the temporary recording region A is broadcast content data which will be deleted due to current loop recording before completion of the preservative recording process. In the broadcast recording apparatus according to the embodiment, for example, broadcast content data which has been written in the temporary recording area A by loop-recording in the past can be indicated accessibly while displayed as a GUI recording list which is a program list expanded in the past direction.

First, when the user pushes the loop recording switch 51 of the remote controller, loop recording starts (step S201).

Upon reception of the operation signal from the loop recording switch 51, the controller 30 and the loop recording and preservative recording controller 42 feed broadcast content data given from the terrestrial broadcasting analog tuner 13 to the encoding portion 21, so that the broadcast content data encoded by the encoding portion 21 is recorded onto the temporary recording area A through the data editing module 20 (step S202).

Upon reception of a recording list display instruction from the remote controller or the like (step S203), for example, the controller 30 in the broadcast recording apparatus 10 according to the embodiment calculates a time necessary for starting deletion of each broadcast content data recorded in the temporary recording area A and a time required for a preservative recording process of the broadcast content data onto the preservation area B (step S204).

Then, the controller 30 refers to the time necessary for starting deletion of each broadcast contents and the time required for the preservative recording process of the broadcast content data onto the preservation area B to thereby determine whether or not each broadcast content data displayed on the recording list 410 is broadcast content data which will be deleted before completion of the preservative recording process (step S205).

The content data 420 shown in the embodiment is content data which are in the temporary recording area A and which has been already partially deleted. For example, in the embodiment, part of the program list is toned down as shown in Fig. 8. Then, broadcast content data which will be deleted before completion of the preservative recording process is likewise toned down (step S206). In this embodiment, configuration is made so that such toned-down broadcast content data are forbidden from being selected (preserved) for preservative recording.

When the user pushes the preservative recording switch 52 of the remote controller now (step S207), then the controller 30 determines whether a plurality of broadcast content data are selected as preservative recording targets or not (step S208).

When determination is made in the step S208 that a plurality of broadcast content data are selected as preservative recording targets (Yes in the step S208), a time required for the preservative recording process of a first content data is added at a time point that the first content data is selected, and determination is made again as to whether or not other content data will be deleted before completion of the preservative recording process. When the sequence of the preservative recording process is changed on this occasion, determination as to whether or not the preservative recording process of each broadcast content data will be completed before deletion of any other content data is made to thereby adjust the sequence of the preservative recording process to an optimum one (step S209). When, for example, broadcast content data 421a and 421b are selected as preservative recording targets as shown in Fig. 9, there is a possibility that the broadcast content data 421b will be deleted before completion of the preservative recording process if the broadcast content data 421a requiring a long time for the preservative recording process is preserved earlier than the broadcast content data 421b. In this embodiment, in order to avoid such a situation, a preservation priority sequence is determined properly in consideration of the time necessary for starting deletion, the capacity of each content data, etc. If, for example, preservation of the broadcast content data 421b requiring a shorter time for the preservative recording process than the broadcast content data 421 a is started with priority, preservation of both the broadcast content data 421 a and 421 b can be completed before deletion. In the embodiment, when a plurality of preservative recording targets are selected, an optimum preservation sequence can be determined in the aforementioned manner based on a result of determination which is made as to whether or not the preservative recording process for each broadcast content data will be completed before start of deletion in accordance with change in the preservative recording sequence.

Then, the controller 30 preserves broadcast content data selected as a preservative recording target on the preservation area B (step S210). If the stop switch 53, not the preservative recording record switch 52, of the remote controller is pushed now (step S211), then loop recording is terminated immediately.

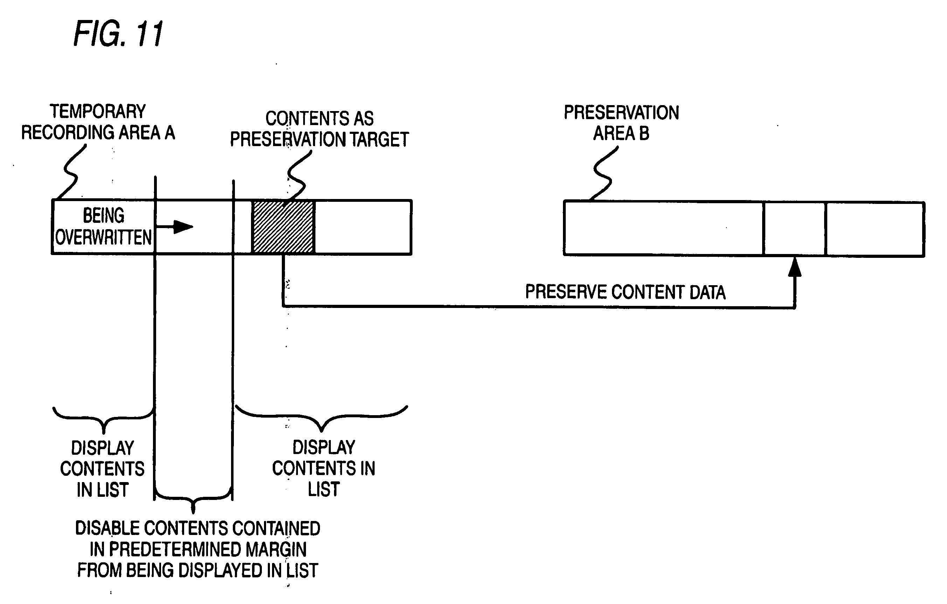

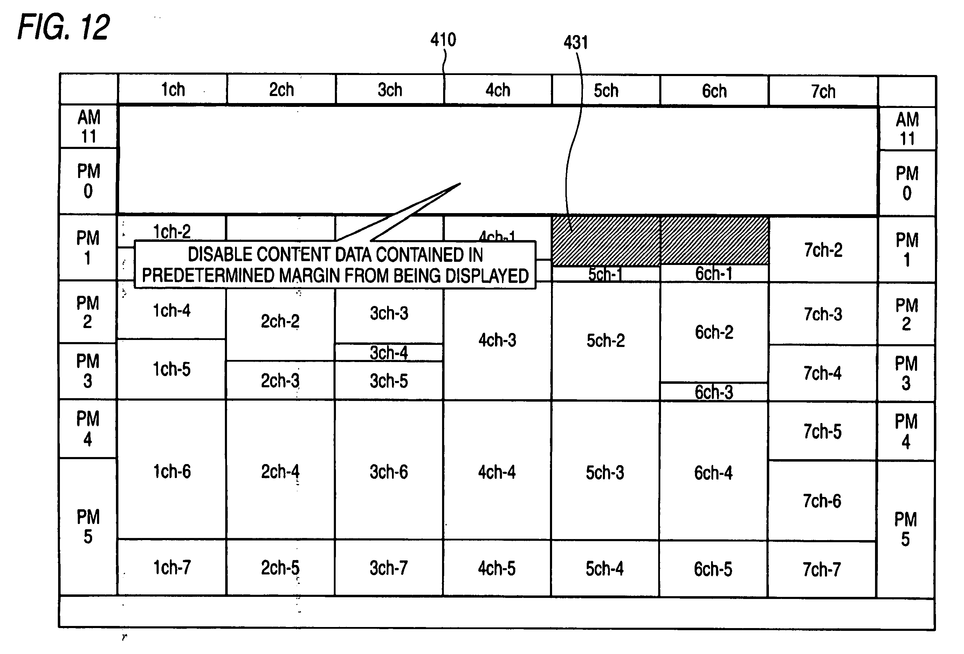

Although the embodiment has been described in the case where part of the program list is toned down for indicating broadcast content data which are in the temporary recording area A and which have been already partially deleted, the invention is not limited thereto as to the method for indicating broadcast content data which will be deleted before completion of the preservative recording process. For example, after a predetermined margin (predetermined time or predetermined capacity) is set, older ones of broadcast content data contained in the predetermined margin and written in the temporary recording area A may be disabled successively from being displayed when the recording list is displayed. This method will be described with reference to Figs. 11 and 12.

Fig. 11 is an explanatory view showing content data as list display targets in the broadcast recording apparatus according to the embodiment. Fig. 12 is an example of display in which a list of broadcast content data recorded in the past is displayed in past electronic program guide form.

As shown in Fig. 11, a predetermined margin is set in advance here. The margin can be set in terms of time, capacity, etc. Other content data except content data contained in the margin are enabled to be displayed in the recording list 410 since the time point (storage area) that overwriting in loop recording is performed. Specifically, as shown in Fig. 12, content data which are preservation targets are displayed but content data which are not preservation targets are not displayed in the recording list 40. Although the embodiment has been described in the case where each content data partially contained in the margin is shaded by oblique lines 431 for indicating the fact that the content data is enabled to be preserved at the present time, the invention is not limited to this display form.

With this configuration, the user can grasp content data as preservation targets intuitively without being aware of the presence of content data which are not preservation targets in advance.

Thus, in the embodiment, determination can be made beforehand as to whether or not broadcast content data as preservative recording targets are content data preservation of which can be completed before deletion. Accordingly, a list of content data can be displayed to thereby inform the user of whether or not the broadcast content data are content data which can be preserved before deletion due to current loop recording. In this manner, improvement in user-friendliness is achieved.

According to the broadcast recording apparatus 10, it is possible to provide improvement in user-friendliness for a recording process.

Although the embodiment according to the present invention has been described above, the present invention is not limited to the above-mentioned embodiment but can be variously modified.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. A broadcast recording apparatus (10) comprising:
a first recording module (18, 18a) configured to record broadcast content data in a first storage area (A) having a limited capacity, wherein, when the first storage area (A) has no free space, the first recording module (18, 18a) is configured to delete old content data recorded in the first storage area (A) to create a free space in the first storage area (A) and to record new broadcast content data in the free space of the first storage area (A);
a second recording module (18, 19) configured to copy predetermined broadcast content data stored in the first storage area (A) to a second storage area (B);
**characterized by**:
a determination module (30) configured to determine whether or not a first time period for the first recording module (18, 18a) to start overwriting the predetermined broadcast content data is shorter than a second time period for the second recording module (18, 19) to complete copying the predetermined broadcast content data from the first storage area (A) to the second storage area (B); and
a control module (30, 34) configured to control the second recording module (18, 19) in accordance with a result of the determination of the determination module (30)
- to permit copying the predetermined broadcast content data when the first time period is not shorter than the second time period, and
- to prevent from copying the predetermined broadcast content data when the first time period is shorter than the second time period.

2. The broadcast recording apparatus of claim 1, further comprising:
a data editing module (20) configured to perform an editing process for deleting a part of broadcast content data of a plurality of programs or for attaching objects of different programs to each other.

3. The broadcast recording apparatus of Claim 2, further comprising
an input unit (52) configured to accept a designation input for designating broadcast content data to be recorded in the second memory (19, B) from the first memory (18A, A),
wherein the control module (30, 34) is further configured to exclude broadcast content data having the first time period shorter than the second time period, from targets designated by the input unit.

4. The apparatus of Claim 3, further comprising
a display unit (41) configured to control a display device to display video corresponding to the broadcast content data recorded in the first memory in a designatable manner,
wherein the second recording module is configured to record broadcast content data corresponding to the designated video to the second storage area (B) from the first storage area (A) in accordance with a designation input of the video received by the input unit (52).

5. The apparatus of Claim 4, wherein the control module is adapted to control the display unit to control the display device to display the broadcast content data having the first time period shorter than the second time period in an undesignatable manner.

## Patentansprüche

1. Broadcast-Aufzeichnungsvorrichtung (10) umfassend:
ein erstes Aufzeichnungsmodul (18, 18a), das konfiguriert ist zum Aufzeichnen von Broadcast-Inhaltsdaten in einem ersten Speicherbereich (A), der eine begrenzte Kapazität aufweist, wobei dann, wenn der erste Speicherbereich (A) keinen freien Platz aufweist, das erste Aufzeichnungsmodul (18, 18a) konfiguriert ist zum Löschen von alten Inhaltsdaten, die in dem ersten Speicherbereich (A) aufgezeichnet sind, zum Erzeugen eines freien Raums in dem ersten Speicherbereich (A) und zum Aufzeichnen neuer Broadcast-Inhaltsdaten in dem freien Raum des ersten Speicherbereichs (A);
ein zweites Aufzeichnungsmodul (18, 19), das konfiguriert ist zum Kopieren vorbestimmter Broadcast-Inhaltsdaten, die in dem ersten Speicherbereich (A) gespeichert sind, in den zweiten Speicherbereich (B);
**gekennzeichnet durch**:
ein Bestimmungsmodul (30), das konfiguriert ist zum Bestimmen, ob eine erste Zeitperiode für das erste Aufzeichnungsmodul (18, 18a) zum Start eines Überschreibens der vorbestimmten Broadcast-Inhaltsdaten kürzer als eine zweite Zeitperiode für das zweite Aufzeichnungsmodul (18, 19) zum Beenden des Kopierens der vorbestimmten Broadcast-Inhaltsdaten von dem ersten Speicherbereich (A) in den zweiten Speicherbereich (B) ist; und
ein Steuermodul (30, 34), das konfiguriert ist zum Steuern des zweiten Aufzeichnungsmoduls (18, 19) gemäß einem Resultat der Bestimmung des Bestimmungsmoduls (30)
- um ein Kopieren der vorbestimmten Broadcast-Inhaltsdaten zu erlauben, wenn die erste Zeitperiode nicht kürzer als die zweite Zeitperiode ist, und
- um das Kopieren der vorbestimmten Broadcast-Inhaltsdaten zu verhindern, wenn die erste Zeitperiode kürzer als die zweite Zeitperiode ist.

2. Broadcast-Aufzeichnungsvorrichtung nach Anspruch 1, ferner umfassend:
ein Daten-Editionsmodul (20), das konfiguriert ist zum Durchführen eines Editionsprozesses zum Löschen eines Teils von Broadcast-Inhaltsdaten einer Vielzahl von Programmen oder zum Anhängen von Objekten unterschiedlicher Programme aneinander.

3. Broadcast-Aufzeichnungsvorrichtung nach Anspruch 2, ferner umfassend
eine Eingabeeinheit (52), die konfiguriert ist zum Akzeptieren einer Bestimmungseingabe zum Bestimmen von Broadcast-Inhaltsdaten, die von dem ersten Speicher (18A, A) in den zweiten Speicher (19, B) aufgezeichnet werden,
wobei das Steuermodul (30, 34) ferner konfiguriert ist zum Ausschließen von Broadcast-Inhaltsdaten, welche die erste Zeitperiode aufweisen, die kürzer als die zweite Zeitperiode ist, von Zielen, die durch die Eingabeeinheit bestimmt werden.

4. Vorrichtung nach Anspruch 3, ferner umfassend
eine Anzeigeeinheit (41), die konfiguriert ist zum Steuern einer Anzeigevorrichtung zum Anzeigen eines Videos, das mit den Broadcast-Inhaltsdaten zusammenhängt, die in dem ersten Speicher gespeichert sind, in einer kennzeichnenden Art und Weise,
wobei das zweite Aufzeichnungsmodul konfiguriert ist zum Aufzeichnen von Broadcast-Inhaltsdaten, die mit dem bestimmten Video zusammenhängen, von dem ersten Speicherbereich (A) in den zweiten Speicherbereich (B) gemäß einer durch die Eingabeeinheit (52) empfangenen Bestimmungseingabe des Videos.

5. Vorrichtung nach Anspruch 4, wobei das Steuermodul ausgebildet ist zum Steuern der Anzeigeeinheit, um die Anzeigevorrichtung zum Anzeigen der Broadcast-Inhaltsdaten zu steuern, die die erste Zeitperiode aufweisen, die kürzer als die zweite Zeitperiode ist, in einer nicht kennzeichnenden Art und Weise.

## Revendications

1. Dispositif d'enregistrement de radiodiffusion (10) comprenant :
un premier module d'enregistrement (18, 18a) configuré pour enregistrer des données de contenu de radiodiffusion dans une première zone de stockage (A) ayant une capacité limitée, dans lequel, quand la première zone de stockage (A) n'a pas d'espace libre, le premier module d'enregistrement (18, 18a) est configuré pour effacer les vieilles données enregistrées dans la première zone de stockage (A) pour créer un espace libre dans la première zone de stockage (A) et pour enregistrer de nouvelles données de contenu de radiodiffusion dans l'espace libre de la première zone de stockage (A) ;
un second module d'enregistrement (18, 19) configuré pour copier des données de contenu de radiodiffusion prédéterminées stockées dans la première zone de stockage (A) dans une seconde zone de stockage (B) ;
**caractérisé par** :
un module de détermination (30) configuré pour déterminer si ou non une première période de temps pour le premier module d'enregistrement (18, 18a) pour commencer à écraser les données de contenu de radiodiffusion prédéterminées est plus courte qu'une seconde période de temps pour le second module d'enregistrement (18, 19) pour terminer la copie des données de contenu de radiodiffusion prédéterminées de la première zone de stockage (A) dans la seconde zone de stockage (B) ; et
un module de commande (30, 34) configuré pour commander le second module d'enregistrement (18, 19) selon un résultat de la détermination du module de détermination (30)
- pour permettre de copier les données de contenu de radiodiffusion prédéterminées quand la première période de temps n'est pas plus courte que la seconde période de temps, et
- pour empêcher de copier les données de contenu de radiodiffusion prédéterminées quand la première période de temps est plus courte que la seconde période de temps.

2. Dispositif d'enregistrement de radiodiffusion selon la revendication 1, comprenant en outre :
un module d'édition de données (20) configuré pour réaliser un processus d'édition pour effacer une partie des données de contenu de radiodiffusion d'une pluralité de programmes ou pour attacher des objets de différents programmes ensemble.

3. Dispositif d'enregistrement de radiodiffusion selon la revendication 2, comprenant en outre
une unité d'entrée (52) configurée pour accepter une entrée de désignation pour désigner des données de contenu de radiodiffusion à enregistrer dans la seconde mémoire (19, B) depuis la première mémoire (18A, A),
dans lequel le module de commande (30, 34) est en outre configuré pour exclure des données de contenu de radiodiffusion ayant la première période de temps plus courte que la seconde période de temps, des cibles désignées par l'unité d'entrée.

4. Dispositif selon la revendication 3, comprenant en outre :
une unité d'affichage (41) configurée pour commander un dispositif d'affichage pour afficher une vidéo correspondant aux données de contenu de radiodiffusion enregistrées dans la première mémoire d'une manière désignable,
dans lequel le second module d'enregistrement est configuré pour enregistrer des données de contenu de radiodiffusion correspondant à la vidéo désignée dans la seconde zone de stockage (B) depuis la première zone de stockage (A) selon une entrée de désignation de la vidéo reçue par l'unité d'entrée (52).

5. Dispositif selon la revendication 4, dans lequel le module de commande est adapté pour commander l'unité d'affichage pour commander le dispositif d'affichage pour afficher les données de contenu de radiodiffusion ayant la première période de temps plus courte que la seconde période de temps d'une manière non désignable.
